(19) Europäisches Patentamt European Patent Office Office européen des brevets

(11) **EP 3 452 792 B1**

(12) **FASCICULE DE BREVET EUROPEEN**

(45) Date de publication et mention de la délivrance du brevet:
**24.03.2021 Bulletin 2021/12**

(21) Numéro de dépôt: **17730509.1**

(22) Date de dépôt: **21.06.2017**

(51) Int Cl.:
***G01G 19/08*** *(2006.01)*

(86) Numéro de dépôt international:
**PCT/EP2017/065176**

(87) Numéro de publication internationale:
**WO 2018/001808 (04.01.2018 Gazette 2018/01)**

(54) **PROCÉDÉ ET DISPOSITIF DE DÉTERMINATION D'UNE ESTIMATION DE LA MASSE TOTALE D'UN VÉHICULE AUTOMOBILE**

VERFAHREN UND VORRICHTUNG ZUR BESTIMMUNG EINER SCHÄTZUNG DER GESAMTMASSE EINES KRAFTFAHRZEUGS

METHOD AND DEVICE FOR DETERMINING AN ESTIMATE OF THE TOTAL MASS OF A MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.06.2016 FR 1656189**

(43) Date de publication de la demande:
**13.03.2019 Bulletin 2019/11**

(73) Titulaire: **Compagnie Générale des Etablissements Michelin**
**63000 Clermont-Ferrand (FR)**

(72) Inventeurs:
• **DI DOMENICO, Domenico**
**69007 Lyon (FR)**

• **CHASSE, Alexandre**
**75017 Paris (FR)**
• **SABIRON, Guillaume**
**69008 Lyon (FR)**

(74) Mandataire: **Roussy, Delphine**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
**WO-A2-2015/004639 FR-A1- 2 857 090**
**FR-A1- 3 014 191**

**Description**

La présente invention concerne le domaine de l'estimation de la masse d'un véhicule automobile, et notamment des véhicules de type « poids lourds » équipés d'un boitier télématique.

On entend par boitier télématique, tout dispositif permettant de recevoir des informations en temps réels sur l'environnement et de fournir des services aux passagers du véhicule adaptés au contexte. De tels boitiers télématiques sont généralement pourvus d'un système de positionnement, notamment de type système de positionnement global dit « Global Positionning System » ou « GPS » en termes anglo-saxons qui utilise des données de position émises en temps réel par une constellation de satellites géostationnaires afin de déterminer précisément la position du véhicule.

Plus particulièrement, l'invention concerne l'estimation à chaque instant de la masse d'un véhicule situé sur voie ayant une pente ou un dévers non-nul.

La connaissance de la masse totale d'un véhicule automobile est nécessaire au bon fonctionnement de nombreux dispositifs embarqués dans le véhicule, notamment les dispositifs de gestion de freinage ou de gestion de la boîte de vitesse automatique, ainsi que les dispositifs de gestion de la consommation de carburant afin d'analyser le suivi de la consommation de carburant et évaluer des marges de réduction de la consommation de carburant.

Par ailleurs, pour les véhicules utilitaires ou les poids lourds offrant une capacité de chargement importante, une estimation de la masse du véhicule permet à l'utilisateur ne pas dépasser une valeur prédéfinie dite de poids total autorisé en charge (PTAC). Des marges d'erreurs autorisées pour la détermination de la masse sont généralement utilisées. Par exemple, la marge d'erreur autorisée peut être de 5% à 10%. Il est néanmoins préférable d'obtenir des marges d'erreurs plus faibles. De plus, la masse des véhicules de type poids lourds sont sujet à des variations de charge importantes en relation avec sa mission. Il est donc souhaitable d'obtenir en temps réel une estimation fiable de la masse du véhicule, même lorsque le véhicule est engagé sur une pente, afin d'obtenir un bilan énergétique détaillé.

Aujourd'hui, l'estimation de la masse d'un véhicule automobile peut se faire de différentes façons, par exemple par mesure directe de la masse, par estimation à l'aide de capteurs d'assiettes et à partir de la raideur du ressort ou de la pression de gonflage de coussins de suspension dans le cas de véhicules poids lourds. Toutefois, ces méthodes sont chères et ne permettent pas d'obtenir une estimation de la masse précise dû à la dispersion de fabrication. De plus, ce type de procédé d'estimation ne permet pas l'estimation de la masse du véhicule lorsque celui-ci se trouve sur une pente. En effet, les trains arrière de véhicule génèrent des efforts sur les suspensions dès lors qu'une force longitudinale (c'est-à-dire un couple) est appliquée sur les roues.

Il existe également des procédés d'estimation de la masse d'un véhicule automobile par application du principe fondamental de la dynamique à un seul instant.

Toutefois, les procédés d'estimation de la masse d'un véhicule automobile par application du principe fondamental de la dynamique nécessitent un certain temps de roulage avant de converger vers une estimation précise de la masse totale du véhicule. De plus, de tels procédés d'estimation sont particulièrement imprécis et lourds à mettre en œuvre car ils nécessitent une estimation de nombreux paramètres du véhicule et se basent sur des hypothèses qui ne sont pas toujours vérifiées.

On peut se référer au document EP 2 505 448-A1 qui décrit un système d'estimation en temps réel de la masse d'un véhicule en utilisant les données présentes sur le réseau de communication Controller Area Network dudit véhicule, notamment l'accélération et le couple moteur à chaque instant. Toutefois, ce document ne décrit pas le procédé permettant de calculer l'estimation de la masse du véhicule.

La présente invention a donc pour objet de remédier à ces inconvénients.

L'invention a pour objet un procédé de détermination de la masse totale d'un véhicule automobile à partir de données d'un réseau de communication « «CAN », et de paramètres du véhicule selon la revendication 1, dans lequel :

- on récupère des données à partir d'une base de données de paramètres du véhicule hébergés dans un calculateur du véhicule automobile.

Le procédé de détermination comprend les étapes suivantes :

- on récupère des paramètres de réglage compris dans le groupe comprenant le temps d'exécution du procédé d'estimation de la masse, la matrice de covariance du bruit de mesure, la matrice de covariance des indéterminations de modélisation sur la vitesse et la pente et la matrice de covariance des indéterminations de modélisation sur la masse,
- on récupère des données provenant du réseau de communication « CAN », compris dans le groupe comportant la vitesse du véhicule le rapport de démultiplication de la transmission, le niveau d'enfoncement de la pédale de frein, le niveau d'utilisation du ralentisseur et une estimation du couple fourni par le moteur thermique et de ces frottements mécaniques,
- on détermine la force motrice générée par le véhicule en fonction de la valeur de couple moteur, du coefficient de démultiplication de la transmission, du coefficient d'efficacité de la transmission et du rayon de la roue,

- on détermine la force de frottement aérodynamique en fonction des données récupérées à partir de la base de données de paramètres,
- on détermine, à un instant, la force de résistance au roulement en fonction de la masse du véhicule, du coefficient de résistance au roulement des pneumatiques, et de la pente de la route,
- on détermine, à un instant, la force induite par la gravité en fonction de la masse du véhicule estimée à un instant précédent, de la constante de pesanteur et de la pente de la route estimée à un instant précédent, et
- on détermine une estimation de la masse totale en charge du véhicule, de la vitesse du véhicule et de la pente de la route à un instant en appliquant l'équation fondamentale de la dynamique et en fonction des valeurs de la masse totale du véhicule, de la vitesse du véhicule et de la pente de la route à un instant précédent.

Selon l'invention, pour déterminer une estimation de la masse totale en charge du véhicule, de la vitesse du véhicule et de la pente de la route, on applique deux filtres en parallèle.

Par exemple, on applique premier filtre dit de « Kalman » permettant le filtrage de la vitesse du véhicule et de la pente de la route et un deuxième dit de « Kalman » permettant d'estimer la masse du véhicule, les deux filtres étant appliqués en parallèle.

En même temps que l'étape de détermination d'une estimation de la masse totale en charge du véhicule, de la vitesse du véhicule et de la pente de la route, on peut déterminer une estimation de deux matrices de covariances : une matrice de covariance de dimension deux fois deux (2x2), exprimant la covariance de l'erreur sur les variables vitesse et pente et une matrice de covariance de dimension une fois une (1x1), exprimant la covariance de l'erreur sur la variable masse en fonction de la matrice de covariance des indéterminations de modélisation sur la vitesse et la pente et de la matrice de covariance des indéterminations de modélisation sur la masse.

Les matrices de covariance peuvent être déterminées sur la base des équations fondamentale de la dynamique, des valeurs de la masse totale du véhicule, de la vitesse du véhicule et de la pente de la route à un instant précédent et d'une équation de Riccati dont la variable recherchée est la matrice de covariance des erreurs d'estimation.

Préalablement à l'étape de récupération des données provenant du réseau de communication, on peut réinitialiser, à l'instant initial la masse du véhicule, la vitesse du véhicule, la pente de la route, et les deux matrices de covariances.

Par exemple, préalablement à l'étape de détermination d'une estimation de la masse totale en charge du véhicule, de la vitesse du véhicule et de la pente de la route, on vérifie, à l'instant, que les conditions sont réunies pour procéder au calcul de l'estimation de la masse.

Dans un mode de réalisation, les conditions à vérifier sont : que la vitesse du véhicule soit strictement positive et que la position de la pédale de frein et le niveau d'utilisation du ralentisseur soient nuls.

Dans un mode de réalisation, on calcule une valeur de l'erreur d'estimation en comparant la valeur de l'estimation de la vitesse déterminée avec la valeur de la vitesse mesurée par le réseau de communication.

Dans un mode de réalisation, on calcule un coefficient de proportionnalité en fonction des matrices de covariances et des équations de la dynamique.

Dans un mode de réalisation, on corrige les estimations de la vitesse du véhicule de la pente de la route et de la masse du véhicule déterminées en fonction de la valeur de l'erreur d'estimation et du coefficient de proportionnalité.

Par exemple, après avoir déterminé les estimations de la vitesse du véhicule de la pente de la route et de la masse du véhicule, on peut vérifier que le trajet du véhicule est terminé, et lorsque le trajet du véhicule est terminé, on peut calculer une valeur moyenne de la masse du véhicule à la fin du trajet en fonction des estimations de la masse du véhicule et on peut transmettre ladite valeur moyenne de la masse calculée à un serveur.

Dans un mode de réalisation, on détermine en temps réel la position du véhicule sous forme de latitude, de longitude et d'altitude en fonction des données satellitaires reçues par un système de positionnement global du véhicule automobile « GPS », et on détermine en temps réel la vitesse du véhicule en fonction des données reçues par le système de positionnement global.

Selon la revendication 9, l'invention concerne un dispositif de détermination de la masse totale d'un véhicule automobile à partir de données d'un réseau de communication comprenant un module de traitement des données apte à recevoir en entrée des données de paramètres du véhicule hébergés dans un calculateur du véhicule automobile, compris dans le groupe comprenant la masse équivalente des éléments roulants, le coefficient de résistance au roulement des pneumatiques, la masse volumique de l'air du véhicule, la surface frontale du véhicule, le coefficient de trainée et le rayon des roues du véhicule.

Le module de traitement des données reçoit en entrée des paramètres de réglage provenant, par exemple, d'une base de données réglage compris dans le groupe comprenant le temps d'exécution du procédé d'estimation de la masse, la matrice de covariance du bruit de mesure, la matrice de covariance des indéterminations de modélisation sur la vitesse et la pente et la matrice de covariance des indéterminations de modélisation sur la masse, et des données provenant d'un réseau de communication, telles que la vitesse du véhicule, le rapport de démultiplication de la transmission, le niveau d'enfoncement de la pédale de frein, le niveau d'utilisation du ralentisseur et une estimation du couple fourni par le moteur thermique et de ces frottements mécaniques.

Le dispositif de détermination comprend un module de calcul d'une estimation de la masse totale en charge du véhicule, de la vitesse du véhicule et de la pente de la route à un instant en appliquant l'équation fondamentale de la dynamique et en fonction des valeurs de la masse totale du véhicule, de la vitesse du véhicule et de la pente de la route à un instant précédent.

Selon l'invention, le module de calcul comprend deux filtres disposés en parallèle et un module d'estimation de deux matrices de covariances respectivement de dimension 2x2, et 1x1 et exprimant respectivement la covariance de l'erreur sur les variables vitesse et pente et la covariance de l'erreur sur la variable masse en fonction de la matrice de covariance des indéterminations de modélisation sur la vitesse et la pente et de la matrice de covariance des indéterminations de modélisation sur la masse.

Le module de calcul comprend, par exemple, un premier module d'estimation de la masse totale en charge du véhicule, de la vitesse du véhicule et de la pente de la route en fonction des valeurs de la masse du véhicule, de la vitesse du véhicule et de la pente de la route à un instant précédent, ledit premier module comprenant un premier filtre dit de « Kalman » permettant le filtrage de la vitesse du véhicule et de la pente de la route et un deuxième dit de « Kalman » permettant d'estimer la masse du véhicule, les deux filtres étant disposés en parallèle.

Dans un mode de réalisation, le module de calcul comprend un module de correction des valeurs d'estimation déterminées comportant un module de calcul d'une erreur d'estimation comparant la valeur de l'estimation de la vitesse déterminée avec la valeur de la vitesse mesurée par le réseau et un module de calcul d'un coefficient de proportionnalité en fonction des matrices de covariances et des équations de la dynamique.

Dans un mode de réalisation, le dispositif de détermination comprend un module de détection de fin de trajet, un module de calcul d'une valeur moyenne de la masse du véhicule à la fin du trajet et un module de communication apte à transmettre ladite valeur moyenne de la masse du véhicule à un serveur.

D'autres buts, caractéristiques et avantages de l'invention apparaîtront à la lecture de la description suivante, donnée uniquement à titre d'exemple non limitatif, et faite en référence aux dessins annexés sur lesquels :

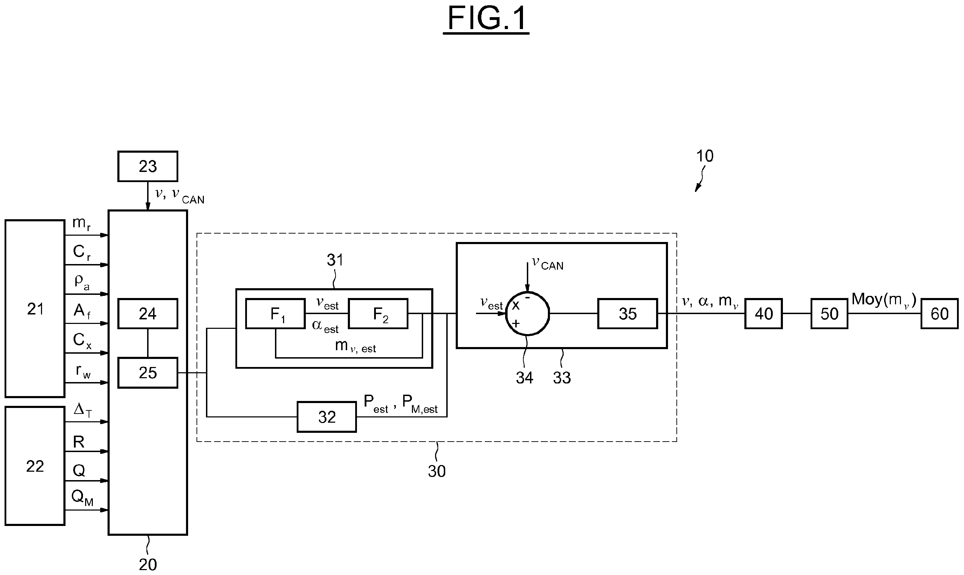

- la figure 1 représente schématiquement le dispositif de détermination d'une estimation de la masse totale d'un véhicule selon l'invention; et
- la figure 2 illustre les étapes du procédé de détermination d'une estimation de la masse totale d'un véhicule selon l'invention.

Un dispositif 10 de détermination d'une estimation de la masse d'un véhicule automobile comprend un module de traitement des données 20, un module de calcul 30 de l'estimation de la masse du véhicule et de la pente de la route, un module de détection 40 de fin de trajet, un module de calcul final 50 d'une valeur moyenne de la masse du véhicule à la fin du trajet, et un module de communication 60 de la valeur moyenne de la masse du véhicule.

Le module de traitement des données 20 reçoit en entrée des données récupérées à partir d'une base de données 21 de paramètres du véhicule hébergés dans un calculateur (non représenté) du véhicule automobile. Les paramètres du véhicule transmis au module de traitement comprennent :

- la masse équivalente des éléments roulants $m_r$, exprimée en kg. Cette masse et obtenue à partir des caractéristiques des composants correspondants. Ainsi, la masse équivalente des roues est obtenue à partir des caractéristiques des roues et pneumatiques et la masse équivalente des inerties de la chaine de traction (moteur, boîte de vitesse, arbre de transmission...) est obtenue à partir des caractéristiques du moteur thermique (cylindrée et nombre de cylindre).
- le coefficient de résistance au roulement des pneumatiques $c_r$. Ce coefficient étant lié aux pneumatiques, il évolue avec le temps. Afin d'obtenir la meilleure précision possible sur l'estimation de la masse, on pourrait prévoir d'estimer ce coefficient par un procédé d'estimation spécifique.
- les coefficients de la résistance aérodynamique, tels que la masse volumique de l'air du véhicule $\rho_a$, la surface frontale du véhicule $A_f$, le coefficient de trainée $c_x$.
- le rayon des roues $r_w$.

Le module de traitement des données 20 reçoit également des paramètres de réglage d'une base de données réglage 22 tels que le temps d'exécution de l'algorithme d'estimation de la masse $\Delta T$, la matrice de covariance du bruit de mesure R, la matrice $Q$ de covariance des indéterminations de modélisation sur la vitesse et la pente et la matrice $Q_M$ de covariance des indéterminations de modélisation sur la masse.

Le module de traitement 20 des données reçoit en outre des données provenant d'un réseau de communication 23 bien connu de l'homme du métier sous l'acronyme anglo-saxon « CAN : Controller Area Network ». Les données transmises par le réseau CAN comprennent la vitesse du véhicule v, le rapport de démultiplication de la boite de vitesse, le niveau d'enfoncement de la pédale de frein, le niveau d'utilisation du ralentisseur et une estimation du couple fourni par le moteur thermique et de ces frottements mécaniques.

Le rapport de démultiplication de la boite de vitesse, le couple moteur, le couple de frottement mécanique du moteur thermique et le rayon des roues sont utilisés pour calculer la variable connue dite de « commande » *u*.

Enfin, le module de traitement des données 20 peut également recevoir en temps réel la position du véhicule sous forme de latitude, de longitude et d'altitude en fonction des données satellitaires reçues par le système de positionnement global (non représenté).

Le module de traitement des données 20 comprend un module d'initialisation, à l'instant t=0, la masse du véhicule $m_v$, la vitesse du véhicule *v*, la pente de la route a, ainsi que deux matrices de covariances *P*, de dimension 2x2, exprimant la covariance de l'erreur sur les variables vitesse et pente et $P_M$, de de dimension 1x1, exprimant la covariance de l'erreur sur la variable masse.

Le module de traitement des données 20 comprend un module de vérification 25, à l'instant t=k, que les conditions sont réunies pour procéder au calcul de l'estimation de la masse. En d'autres termes, pour procéder au calcul de l'estimation de la masse, il faut que la vitesse du véhicule v soit strictement positive et que la position de la pédale de frein et le niveau d'utilisation du ralentisseur soient nuls. On pourrait également envisager, en variante, de conditionner le calcul de l'estimation de la masse à l'engagement d'un rapport de la boite de vitesse.

Si l'une de ces conditions n'est pas vérifiée, le module de calcul de l'estimation de la masse procédera au calcul de la masse et de la pente en fonction des données à l'instant t=k-1.

Le module de calcul 30 de l'estimation de la masse du véhicule et de la pente de la route utilise un algorithme d'approche récursive basée sur un modèle mathématique de la dynamique longitudinale du véhicule.

L'équation de la dynamique du véhicule qui relie les efforts agissants sur le véhicule à la masse du véhicule permet d'obtenir l'équation Eq.1 :

$$(m_v + m_r).\frac{d}{dt}v(t) = F_t(t) - F_{ext}(t) \qquad \text{(Eq. 1)}$$

Avec :

$m_v$, la masse du véhicule, exprimée en kg ;
$m_r$, la masse équivalente des éléments roulants, exprimée en kg ;
*v*, la vitesse du véhicule, exprimée en m.s$^{-2}$ ;
$F_t$(t), la force de traction appliquée sur le véhicule, exprimée en N ; et
$F_{ext}$(t), les forces extérieures appliquées sur le véhicule, exprimées en N.

La force de traction $F_t$(t) s'écrit selon l'équation suivante :

$$F_t(v) = T_e(t).\gamma(t).\eta_{gb}.r_w \qquad \text{(Eq. 2)}$$

Avec :

$T_e$, le couple du moteur thermique, exprimé en N.m ;
$\gamma$, le coefficient de démultiplication de la transmission ;
$\eta_{gb}$, le coefficient d'efficacité de la transmission ; et
$r_w$, le rayon de la roue, exprimé en m.

L'ensemble des forces extérieures $F_{ext}$(t) appliquées sur le véhicule regroupe la force de frottement aérodynamique $Fa$(t), la force de résistance au roulement $F_r$(t) et la force induite par la gravité $F_g$(t).

La force de frottement aérodynamique $Fa$(t) dépend de la masse volumique de l'air du véhicule $\rho_a$, de la surface frontale du véhicule $A_f$, du coefficient de trainée $c_x$ et de la vitesse relative d'avancement du véhicule par rapport à l'air ($v$-$v_{wind}$). La force de frottement aérodynamique $Fa$(t) s'écrit selon l'équation suivante :

$$Fa(v) = \frac{1}{2}.\rho_a.A_f.c_x.(v - v_{wind})^2 \qquad \text{(Eq. 3)}$$

La vitesse relativement du vent $v_{wind}$ n'est pas connue, pour calculer l'équation Eq.3, on fait l'hypothèse que cette vitesse est négligeable, dans la mesure où elle n'a pas d'impact sur la précision de l'estimation de la masse du véhicule.

La force de résistance au roulement $F_r$(t) dépend de la masse du véhicule $m_v$, du coefficient de résistance au roulement des pneumatiques $c_r$ et de la pente de la route $\alpha$ comme décrit dans l'équation suivante :

$$F_r(v) = c_r.m_v.\cos(\alpha) \qquad \text{(Eq. 4)}$$

La force induite par la gravité $F_g$(t) dépend de la masse du véhicule $m_v$, de la constante de pesanteur g et de la pente de la route a comme décrit dans l'équation suivante :

$$F_g(\alpha) = m_v.g.\sin(\alpha) \qquad \text{(Eq. 5)}$$

Le module de calcul 30 comprend un premier module 31 d'estimation de la vitesse $v_{est}$ du véhicule, de la pente de la route $\alpha_{est}$ et de la masse du véhicule $m_{v,est}$. Le premier module 31 d'estimation comprend un premier filtre $F_1$, dit de « Kalman », permettant le filtrage de la mesure de la vitesse et de l'estimation de la pente de la route empruntée et un deuxième filtre $F_2$, dit de « Kalman », permettant d'estimer la masse du véhicule. Les deux filtres sont exécutés en parallèle de sorte que les informations sont mutualisées entre les deux filtres et les variables estimées par le premier filtre sont nécessaires à l'estimation du deuxième filtre, et inversement.

L'estimation de la vitesse $v_{est}$ du véhicule est calculée selon l'équation suivante :

$$v_{est}(k) = v(k-1) + \frac{\Delta T}{M(k-1)+m_r}.(u(k-1) - c_r.m_v(k-1) - g.m_v(k-1)\sin(\alpha(k-1)) - \frac{1}{2}.\rho_a.A_f.c_x.v^2(k-1))$$

$$\text{(Eq. 6)}$$

L'estimation de la pente de la route $\alpha_{est}$ est calculée selon l'équation suivante :

$$\sin(\alpha_{est}(k)) = \sin(\alpha(k-1)) \qquad \text{(Eq. 7)}$$

L'estimation de la masse du véhicule $m_{v,est}$ est calculée selon l'équation suivante :

$$m_{v,est}(k) = m_v(k-1) \qquad \text{(Eq. 8)}$$

Le premier module 31 d'estimation détermine les équations 6 à 8 en fonction des équations 1 à 5, des variables mesurées et des valeurs de la masse du véhicule, de la vitesse du véhicule et de la pente de la route calculés à l'instant t=k-1.

Le module de calcul 30 comprend également un deuxième module 32 d'estimation des deux matrices $P_{est}$ et $P_{M,est}$ de covariance sur la base des valeurs à l'instant t=k-1, des équations 1 à 5 et d'une équation, dite de Riccati, dont la variable recherchée est la matrice de covariance des erreurs d'estimation :

$$P_{est}(k) = A(k).P(k-1).A(k)^T + Q \qquad \text{(Eq. 9)}$$

$$P_{M,est}(k) = P_M(k-1) + Q_M \qquad \text{(Eq. 10)}$$

Avec :

A, la matrice dynamique du linéarisé tangent (linéarisation des équations Eq. 6 Eq. 7 par rapport à la vitesse et la pente)

*Q*, la matrice de covariance des indéterminations de modélisation sur la vitesse et la pente et la matrice ; et
*Q*$_M$, la matrice de covariance des indéterminations de modélisation sur la masse.

Le module de calcul 30 comprend en outre un module de correction 33 des valeurs d'estimation calculées aux équations 6 à 8 comportant un module 34 de calcul de l'erreur d'estimation ε(k) comparant la valeur de l'estimation de la vitesse *v*$_{est}$ calculée par le premier module d'estimation avec la valeur de la vitesse *v*$_{CAN}$ mesurée par le réseau CAN :

$$\varepsilon(k) = v_{est}(k) - v_{CAN}(k) \qquad \text{(Eq. 11)}$$

Le module de correction 33 comprend un module 35 de calcul des coefficients de proportionnalité *L* et *L*$_M$, dit « gain de l'observateur », calculé sur la base des matrices de covariances *P*$_{est}$ et *P*$_{M,est}$ et des équations de la dynamique 1 à 5 :

$$L(k) = (L_1(k), L_2(k))^T = P_{est}(k).C^T(k).(C(k).P_{est}(k).C^T(k) + R)^{-1} \qquad \text{(Eq. 12)}$$

$$L_M(k) = P_{M,est}(k).C_M^T(k).(C_M(k).P_{M,est}(k).C_M^T(k) + R)^{-1} \qquad \text{(Eq. 13)}$$

Avec :

   *L*$_1$, *L*$_2$, définies par l'équation Eq. 12 ; et
   C, C$_M$, les matrices de sortie du linéarisé tangent (linéarisation des équations de sortie du système par rapport à l'état → C=(0,1) C$_M$=Cd$_f$/d$_M$, où f= Eq.6 et Eq.7)

Avec :

$$P(k) = P_{est}(k) - L(k).C(k).P_{est}(k) \qquad \text{(Eq. 14)}$$

$$P_M(k) = P_{M,est}(k) - L_M(k).C_M(k).P_{M,est}(k) \qquad \text{(Eq. 15)}$$

La valeur de la vitesse v du véhicule corrigée est calculée selon l'équation suivante :

$$v(k) = v_{est}(k) + L_1(k).\varepsilon(k) \qquad \text{(Eq. 16)}$$

La valeur de la pente de la route α corrigée est calculée selon l'équation suivante :

$$\sin(\alpha(k)) = \sin(\alpha_{est}(k)) + L_2(k).\varepsilon(k) \qquad \text{(Eq. 17)}$$

La valeur de la masse du véhicule *m*$_v$ corrigée est calculée selon l'équation suivante :

$$m_v(k) = m_{v,est}(k) + L_M(k).\varepsilon(k) \qquad \text{(Eq. 18)}$$

Le module de détection 40 de fin de trajet vérifie si le trajet est terminé, par exemple, à l'aide d'un moyen de temporisation et de comparaison de la temporisation à une valeur de seuil. Si le trajet n'est pas terminé, le module de calcul 30 réitère les équations 6 à 18.

Lorsque le trajet est terminé, le module de calcul final 50 calcule une valeur moyenne de la masse Moy(m$_v$) du véhicule à la fin du trajet. Le module de communication 60 transmet ensuite la valeur moyenne de la masse Moy(m$_v$) du véhicule à un serveur (non représenté), par exemple extérieur au véhicule, par exemple par des moyens télématiques.

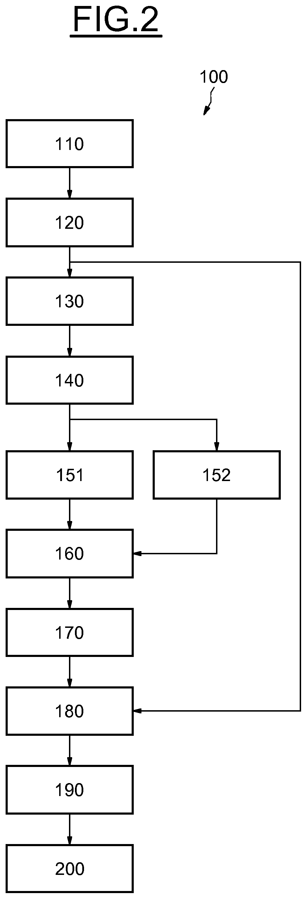

L'organigramme représenté sur la figure 2 illustre le procédé 100 de détermination d'une estimation de la masse d'un véhicule automobile.

Lors d'une première étape 110, on récupère les données comprenant : la masse équivalente des éléments roulants $m_r$; le coefficient de résistance au roulement des pneumatiques $c_r$, les coefficients de la résistance aérodynamique, tels que la masse volumique de l'air du véhicule $\rho_a$, de la surface frontale du véhicule $A_f$, du coefficient de trainée $c_x$; le rayon des roues $r_w$ ; et les paramètres de réglage tels que le temps d'exécution de l'algorithme d'estimation de la masse $\Delta T$, la matrice de covariance du bruit de mesure R, la matrice $Q$ de covariance des indéterminations de modélisation sur la vitesse et la pente et la matrice $Q_M$ de covariance des indéterminations de modélisation sur la masse.

A titre d'exemple non limitatif, on peut récupérer également, en temps réel, la position du véhicule sous forme de latitude, de longitude et d'altitude en fonction des données satellitaires reçues par le système de positionnement global GPS (non représenté).

Lors d'une deuxième étape 120, on initialisation, à l'instant t=0, la masse du véhicule $m_v$, la vitesse du véhicule $v$, la pente de la route ($\alpha$), ainsi que deux matrices de covariances $P$, de dimension 2x2, exprimant la covariance de l'erreur sur les variables vitesse et pente et $P_M$, de de dimension 1x1, exprimant la covariance de l'erreur sur la variable masse.

Lors d'une troisième étape 130, on récupère des données provenant du réseau de communication « CAN », telles que la vitesse du véhicule $v$, le rapport de démultiplication de la boite de vitesse, le niveau d'enfoncement de la pédale de frein, le niveau d'utilisation du ralentisseur et une estimation du couple fourni par le moteur thermique et de ces frottements mécaniques.

Lors d'une quatrième étape 140, on vérifie, à l'instant t=k, que les conditions sont réunies pour procéder au calcul de l'estimation de la masse. En d'autres termes, pour procéder au calcul de l'estimation de la masse, il faut que la vitesse du véhicule $v$ soit strictement positive et que la position de la pédale de frein et le niveau d'utilisation du ralentisseur soient nuls. On pourrait également envisager, en variante, de conditionner le calcul de l'estimation de la masse à l'engagement d'un rapport de la boite de vitesse.

Si l'une de ces conditions n'est pas vérifiée, le module de calcul de l'estimation de la masse procédera au calcul de la masse et de la pente en fonction des données à l'instant t=k-1. En d'autres termes, les valeurs sont figées à l'instant précédent k-1.

Lors d'une cinquième étape 151, on calcule l'estimation de la vitesse $v_{est}$ du véhicule, de la pente de la route $\alpha_{est}$ et de la masse du véhicule $m_v$ en utilisant un algorithme d'approche récursive basée sur un modèle mathématique de la dynamique longitudinale du véhicule résultant des équations 1 à 5 ci-dessus.

En même temps, lors d'une étape 152, on calcule l'estimation des deux matrices $P_{est}$ et $P_{M,est}$ selon les équations 9 et 10 :

$$P_{est}(k) = A(k).P(k-1).A(k)^T + Q \qquad\qquad \text{(Eq. 9)}$$

$$P_{M,est}(k) = P_M(k-1) + Q_M \qquad\qquad \text{(Eq. 10)}$$

Lors d'une sixième étape 160, on calcule la valeur de l'erreur d'estimation $\varepsilon(k)$ en comparant la valeur de l'estimation de la vitesse $v_{est}$ calculée par le premier module d'estimation avec la valeur de la vitesse $v_{CAN}$ mesurée par le réseau CAN :

$$\varepsilon(k) = v_{est}(k) - v_{CAN}(k) \qquad\qquad \text{(Eq. 11)}$$

Lors d'une septième étape 170, on calcul un coefficient de proportionnalité L, dit « gain de l'observateur », selon les équations 12 à 15 précédents. Le coefficient de proportionnalité L calculé sur la base des matrices de covariances $P_{est}$ et $P_{M,est}$ et des équations de la dynamique 1 à 5 et on corrige la valeur de la vitesse $v_{est}$ du véhicule calculée selon l'équation 6, la valeur de la pente de la route $\alpha_{est}$ calculée selon l'équation 7 et la valeur de la masse du véhicule $m_{v,est}$ du véhicule calculée selon l'équation 8.

Lors d'une huitième étape 180, on vérifie si le trajet est terminé, par exemple, à l'aide d'un moyen de temporisation et de comparaison de la temporisation à une valeur de seuil. Si le trajet n'est pas terminé, on réitère les étapes 130 à 170.

Lorsque le trajet est terminé, on calcule, à l'étape 190, une valeur moyenne de la masse $Moy(m_v)$ du véhicule à la fin du trajet et on transmet, à l'étape 200, la valeur moyenne de la masse $Moy(m_v)$ calculée à un serveur (non représenté), par exemple extérieur au véhicule, par exemple par des moyens télématiques.

Ainsi, la masse totale d'un véhicule peut être estimée de manière fiable et rapide, et ce, même en condition de pente de la route empruntée.

Le véhicule peut être un véhicule automobile ou une voiture de train ou un chariot ou un appareil de levage.
Par masse, on entend par « masse totale » d'un véhicule automobile, la masse du véhicule y compris sa cargaison dans le cas d'un semi-remorque ou de véhicules articulés et/ou y compris ses passagers dans le cas d'un véhicule sans cargaison ou d'un bus.

**Revendications**

1. Procédé de détermination de la masse totale d'un véhicule automobile à partir de données d'un réseau de communication, et de paramètres du véhicule, dans lequel :

   - on récupère des données à partir d'une base de données de paramètres du véhicule hébergés dans un calculateur du véhicule automobile,

   **caractérisé en ce qu'**il comprend les étapes suivantes :

   - on récupère à partir d'une base de données réglage (22) des paramètres de réglage compris dans le groupe comprenant le temps d'exécution du procédé d'estimation de la masse ($\Delta T$), la matrice de covariance du bruit de mesure (R), la matrice (Q) de covariance des indéterminations de modélisation sur la vitesse et la pente et la matrice ($Q_M$) de covariance des indéterminations de modélisation sur la masse,
   - on récupère des données provenant du réseau de communication, compris dans le groupe comprenant la vitesse du véhicule (v) le rapport de démultiplication de la transmission ($\gamma$), le niveau d'enfoncement de la pédale de frein, le niveau d'utilisation du ralentisseur et une estimation du couple fourni par le moteur thermique ($T_e$) et de ces frottements mécaniques,
   - on détermine la force motrice ($F_t(t)$) générée par le véhicule en fonction de la valeur de couple moteur ($T_e$), du coefficient de démultiplication de la transmission ($\gamma$), du coefficient d'efficacité de la transmission ($\eta_{gb}$) et du rayon de la roue ($r_w$),
   - on détermine la force de frottement aérodynamique ($F_a(t)$) en fonction des données récupérées à partir de la base de données de paramètres,
   - on détermine la force de résistance au roulement ($F_r(t)$) en fonction de la masse du véhicule ($m_v$), du coefficient de résistance au roulement des pneumatiques ($c_r$), et de la pente de la route ($\alpha$),
   - on détermine la force induite par la gravité ($F_g(t)$) en fonction de la masse du véhicule ($m_v$), de la constante de pesanteur (g) et de la pente de la route ($\alpha$), et
   - on détermine une estimation de la masse totale ($m_{v,est}$) en charge du véhicule, de la vitesse du véhicule ($v_{est}$) et de la pente de la route ($\alpha_{est}$) à un instant (k) en appliquant l'équation fondamentale de la dynamique et en fonction des valeurs de la masse totale du véhicule, de la vitesse du véhicule et de la pente de la route à un instant précédent (k-1), **en ce que** pour déterminer une estimation de la masse totale ($m_{v,est}$) en charge du véhicule, de la vitesse du véhicule ($v_{est}$) et de la pente de la route ($\alpha_{est}$), on applique un premier filtre ($F_1$) dit de « Kalman » permettant le filtrage de la vitesse du véhicule ($v_{est}$) et de la pente de la route ($\alpha_{est}$) et un deuxième ($F_2$) dit de « Kalman » permettant d'estimer la masse du véhicule, les deux filtres étant appliqués en parallèle, , et **en ce que** :
   - en même temps que l'étape de détermination d'une estimation de la masse totale ($m_{v,est}$) en charge du véhicule, de la vitesse du véhicule ($v_{est}$) et de la pente de la route ($\alpha_{est}$), on détermine une estimation deux matrices de covariances (P), de dimension 2x2, exprimant la covariance de l'erreur sur les variables vitesse et pente et ($P_M$) de de dimension 1x1, exprimant la covariance de l'erreur sur la variable masse en fonction de la matrice (Q) de covariance des indéterminations de modélisation sur la vitesse et la pente et de la matrice ($Q_M$) de covariance des indéterminations de modélisation sur la masse sur la base des équations fondamentale de la dynamique, des valeurs de la masse totale du véhicule, de la vitesse du véhicule et de la pente de la route à un instant précédent (k-1) et d'une équation de Riccati dont la variable recherchée est la matrice de covariance des erreurs d'estimation.

2. Procédé de détermination selon la revendication 1, dans lequel, préalablement à l'étape de récupération des données provenant du réseau de communication, on réinitialise, à l'instant initial (t=0), la masse du véhicule ($m_v$), la vitesse du véhicule (v), la pente de la route ($\alpha$), et les deux matrices de covariances (P, $P_M$).

3. Procédé de détermination selon l'une quelconque des revendications 1 ou 2, dans lequel, préalablement à l'étape de détermination d'une estimation de la masse totale ($m_{v,est}$) en charge du véhicule, de la vitesse du véhicule ($v_{est}$) et de la pente de la route ($\alpha_{est}$), on vérifie, à l'instant (k), que les conditions sont réunies pour procéder au calcul de l'estimation de la masse.

4. Procédé de détermination selon la revendication 3, dans lequel les conditions à vérifier sont : que la vitesse du véhicule *(v)* soit strictement positive et que la position de la pédale de frein et le niveau d'utilisation du ralentisseur soient nuls.

5. Procédé de détermination selon l'une quelconque des revendications 1 à 4, dans lequel, on calcule une valeur de l'erreur d'estimation ($\varepsilon$(k)) en comparant la valeur de l'estimation de la vitesse ($v_{est}$) déterminée avec la valeur de la vitesse ($v_{CAN}$) mesurée par le réseau de communication.

6. Procédé de détermination selon l'une quelconque des revendications 1 à 5, dans lequel, on calcul au moins un coefficient de proportionnalité (*L, $L_M$*) en fonction des matrices de covariances ($P_{est}$, $P_{M,est}$) et des équations de la dynamique.

7. Procédé de détermination selon les revendications 5 et 6, dans lequel on corrige les estimations de la vitesse ($v_{est}$) du véhicule de la pente de la route ($\alpha_{est}$) et de la masse du véhicule ($m_{v,est}$) déterminées en fonction de la valeur de l'erreur d'estimation ($\varepsilon$(k)) et du coefficient de proportionnalité (*L*).

8. Procédé de détermination selon l'une quelconque des revendications 1 à 7, dans lequel après avoir déterminer les estimations de la vitesse ($v_{est}$) du véhicule de la pente de la route ($\alpha_{est}$) et de la masse du véhicule ($m_{v,est}$), on vérifie que le trajet du véhicule est terminé, et on lorsque le trajet du véhicule est terminé, on calcule une valeur moyenne de la masse (*Moy($m_v$)*) du véhicule à la fin du trajet en fonction des estimations de la masse du véhicule ($m_{v,est}$) et on transmet ladite valeur moyenne de la masse (*Moy(mv)*) calculée à un serveur.

9. Dispositif de détermination de la masse totale d'un véhicule automobile à partir de données d'un réseau de communication et de paramètres du véhicule, comprenant :

- un module de traitement des données apte à recevoir en entrée des données de paramètres du véhicule hébergés dans un calculateur du véhicule automobile comprenant la masse équivalente des éléments roulants ($m_r$), le coefficient de résistance au roulement des pneumatiques ($c_r$), la masse volumique de l'air du véhicule ($\rho_a$), la surface frontale du véhicule ($A_f$), le coefficient de trainée ($c_x$) et le rayon des roues ($r_w$) du véhicule, **caractérisé en ce que** :

le module de traitement des données reçoit en entrée des paramètres de réglage provenant d'une base de données réglage (22) tels que le temps d'exécution du procédé d'estimation de la masse ($\Delta$T), la matrice de covariance du bruit de mesure (R), la matrice (Q) de covariance des indéterminations de modélisation sur la vitesse et la pente et la matrice ($Q_M$) de covariance des indéterminations de modélisation sur la masse, et des données provenant d'un réseau de communication, telles que la vitesse du véhicule (*v*) le rapport de démultiplication de la transmission ($\gamma$), le niveau d'enfoncement de la pédale de frein, le niveau d'utilisation du ralentisseur et une estimation du couple fourni par le moteur thermique ($T_e$) et de ces frottements mécaniques ; et
**en ce qu'**il comprend un module de calcul (30) d'une estimation de la masse totale ($m_{v,est}$) en charge du véhicule, de la vitesse du véhicule ($v_{est}$) et de la pente de la route ($\alpha_{est}$) à un instant (k) en appliquant l'équation fondamentale de la dynamique et en fonction des valeurs de la masse totale du véhicule, de la vitesse du véhicule et de la pente de la route à un instant précédent (k-1), ledit module (30) de calcul comprenant un premier module (31) d'estimation de la masse totale ($m_{v,est}$) en charge du véhicule, de la vitesse du véhicule ($v_{est}$) et de la pente de la route ($\alpha_{est}$) en fonction des valeurs de la masse du véhicule, de la vitesse du véhicule et de la pente de la route à un instant précédent (k-1), ledit premier module (31) comprenant un premier filtre ($F_1$) dit de « Kalman » permettant le filtrage de la vitesse du véhicule ($v_{est}$) et de la pente de la route ($\alpha_{est}$) et un deuxième ($F_2$) dit de « Kalman » permettant d'estimer la masse du véhicule, les deux filtres étant disposés en parallèle et dans lequel le module (30) de calcul comprend un deuxième module (32) d'estimation de deux matrices de covariances (*P, $P_M$*) respectivement de dimension 2x2, et 1x1 et exprimant respectivement la covariance de l'erreur sur les variables vitesse et pente et la covariance de l'erreur sur la variable masse en fonction de la matrice (Q) de covariance des indéterminations de modélisation sur la vitesse et la pente et de la matrice ($Q_M$) de covariance des indéterminations de modélisation sur la masse sur la base des équations fondamentale de la dynamique, des valeurs de la masse totale du véhicule, de la vitesse du véhicule et de la pente de la route à un instant précédent (k-1) et d'une équation de Riccati dont la variable recherchée est la matrice de covariance des erreurs d'estimation.

10. Dispositif de détermination selon la revendication 9, dans lequel le module de calcul (30) comprend un module de correction (33) des valeurs d'estimation déterminées comportant un module (34) de calcul d'une erreur d'estimation ($\varepsilon$(k)) comparant la valeur de l'estimation de la vitesse ($v_{est}$) déterminée avec la valeur de la vitesse ($v_{CAN}$) mesurée par le réseau et un module (35) de calcul d'un coefficient de proportionnalité ($L, L_M$) en fonction des matrices de covariances ($P_{est}, P_{M,est}$) et des équations de la dynamique.

11. Dispositif de détermination selon l'une quelconque des revendications 9 ou 10, comprenant un module (40) de détection de fin de trajet, un module (50) de calcul d'une valeur moyenne de la masse ($Moy(m_v)$) du véhicule à la fin du trajet et un module de communication (60) apte à transmettre ladite valeur moyenne de la masse ($Moy(m_v)$) du véhicule à un serveur.

**Patentansprüche**

1. Verfahren zum Bestimmen der Gesamtmasse eines Kraftfahrzeugs ausgehend von Daten eines Kommunikationsnetzwerks und Parametern des Fahrzeugs, wobei:

   - Daten ausgehend von einer Datenbank von Parametern des Fahrzeugs, die in einem Rechner des Kraftfahrzeugs gehostet sind, abgerufen werden,

   **dadurch gekennzeichnet, dass** es folgende Schritte umfasst:

   - Abrufen ausgehend von einer Einstellungsdatenbank (22) der Einstellungsparameter, die in der Gruppe enthalten sind, die die Ausführungszeit des Masseschätzungsverfahrens ($\Delta$T), die Kovarianzmatrix des Messrauschens (R), die Kovarianzmatrix (Q) von Modellierungsunbestimmtheiten auf der Geschwindigkeit und dem Gefälle und die Kovarianzmatrix ($Q_M$) der Modellierungsunbestimmtheiten auf der Masse umfasst,
   - Abrufen von Daten, die aus dem Kommunikationsnetzwerk stammen, die in der Gruppe enthalten sind, die die Geschwindigkeit des Fahrzeugs (v), das Untersetzungsverhältnis des Getriebes ($\gamma$), das Eindrückniveau des Bremspedals, das Nutzungsniveau des Verlangsamers und eine Schätzung des Moments, das von dem Verbrennungsmotor ($T_e$) und diesen mechanischen Reibungen geliefert wird, umfasst,
   - Bestimmen der Antriebskraft ($F_t(t)$), die von dem Fahrzeug in Abhängigkeit von dem Antriebsdrehmoment ($T_e$), dem Untersetzungskoeffizienten des Getriebes ($\gamma$), dem Effizienzkoeffizienten des Getriebes ($\eta_{gb}$) und dem Radius des Rades ($r_w$) erzeugt wird,
   - Bestimmen der aerodynamischen Reibungskraft ($F_a(t)$) in Abhängigkeit von den Daten, die ausgehend von der Parameterdatenbank abgerufen wurden,
   - Bestimmen des Fahrwiderstands ($F_r(t)$) in Abhängigkeit von der Masse des Fahrzeugs ($m_v$), dem Fahrwiderstandskoeffizienten der Reifen ($c_r$) und dem Gefälle der Strecke ($\alpha$),
   - Bestimmen der Kraft, die von der Schwerkraft ($F_g(t)$) in Abhängigkeit von der Masse des Fahrzeugs ($m_v$), der Gravitationskonstante (g) und dem Gefälle der Strecke ($\alpha$) induziert wird, und
   - Bestimmen einer Schätzung der zulässigen Gesamtmasse ($m_{v,est}$) des Fahrzeugs, der Geschwindigkeit des Fahrzeugs ($v_{est}$) und des Gefälles der Strecke ($\alpha_{est}$) in einem Augenblick (k) unter Anwenden der Grundgleichung der Dynamik und in Abhängigkeit von den Werten der Gesamtmasse des Fahrzeugs, der Geschwindigkeit des Fahrzeugs und des Gefälles der Strecke in einem vorhergehenden Augenblick (k-1), dass zum Bestimmen einer Schätzung der zulässigen Gesamtmasse ($m_{v,est}$) des Fahrzeugs, der Geschwindigkeit des Fahrzeugs ($v_{est}$) und des Gefälles der Strecke ($\alpha_{est}$) ein erstes Filter ($F_1$), "Kalman"-Filter genannt, angewandt wird, das das Filtern der Geschwindigkeit des Fahrzeugs ($v_{est}$) und des Gefälles der Strecke ($\alpha_{est}$) erlaubt, und ein zweites Filter ($F_2$), "Kalman"-Filter genannt, das das Schätzen der Masse des Fahrzeugs erlaubt, wobei die zwei Filter parallel angewandt werden, und dass:
   - gleichzeitig mit dem Bestimmungsschritt einer Schätzung der zulässigen Gesamtmasse ($m_{v,est}$) des Fahrzeugs, der Geschwindigkeit des Fahrzeugs ($v_{est}$) und dem Gefälle der Strecke ($\alpha_{est}$) eine Schätzung zweier Kovarianzmatrizen (P) mit Dimension 2x2 bestimmt wird, die die Kovarianz des Fehlers auf den Variablen Geschwindigkeit und Gefälle ausdrücken, und ($P_M$) mit Dimension 1x1, die die Kovarianz des Fehlers auf der Variablen Masse in Abhängigkeit von der Kovarianzmatrix (Q) der Modellierungsunbestimmtheiten auf der Geschwindigkeit und dem Gefälle und der Kovarianzmatrix ($Q_M$) der Modellierungsunbestimmtheiten auf der Masse auf der Basis der Grundgleichungen der Dynamik, der Werte der Gesamtmasse des Fahrzeugs, der Geschwindigkeit des Fahrzeugs und des Gefälles der Strecke in einem vorhergehenden Augenblick (k-1) und einer Riccati-Gleichung, deren gesuchte Variable die Kovarianzmatrix der Schätzungsfehler ist, ausdrückt.

2. Bestimmungsverfahren nach Anspruch 1, wobei vor dem Abrufschritt der Daten, die aus dem Kommunikationsnetzwerk stammen, in dem Anfangsaugenblick (t=0) die Masse des Fahrzeugs ($m_v$), die Geschwindigkeit des Fahrzeugs ($v$), das Gefälle der Strecke ($\alpha$) und die zwei Kovarianzmatrizen ($P$, $P_M$) reinitialisiert werden.

3. Bestimmungsverfahren nach einem der Ansprüche 1 oder 2, wobei vor dem Bestimmungsschritt eine Schätzung der zulässigen Gesamtmasse ($m_{v,est}$) des Fahrzeugs, der Geschwindigkeit des Fahrzeugs ($v_{est}$) und des Gefälles der Strecke ($\alpha_{est}$) in dem Augenblick (k) geprüft wird, dass die Bedingungen vereint sind, um die Berechnung der Schätzung der Masse vorzunehmen.

4. Bestimmungsverfahren nach Anspruch 3, wobei die zu prüfenden Bedingungen sind: dass die Geschwindigkeit des Fahrzeugs ($v$) strikt positiv ist, und dass die Position des Bremspedals und das Nutzungsniveau des Verlangsamers gleich null sind.

5. Bestimmungsverfahren nach einem der Ansprüche 1 bis 4, bei dem ein Wert des Schätzungsfehlers ($\varepsilon(k)$) durch Vergleichen des Werts der Schätzung der Geschwindigkeit ($v_{est}$), der mit dem Wert der Geschwindigkeit ($v_{CAN}$), der von dem Kommunikationsnetz gemessen wird, berechnet wird.

6. Bestimmungsverfahren nach einem der Ansprüche 1 bis 5, wobei mindestens ein Proportionalitätskoeffizient ($L$, $L_M$) in Abhängigkeit von den Kovarianzmatrizen ($P_{est}$, $P_{M,est}$) und den Gleichungen der Dynamik berechnet wird.

7. Bestimmungsverfahren nach den Ansprüchen 5 und 6, wobei die Schätzungen der Geschwindigkeit ($v_{est}$) des Fahrzeugs, des Gefälles der Strecke ($\alpha_{est}$) und der Masse des Fahrzeugs ($m_{v,est}$), die in Abhängigkeit von dem Wert des Schätzungsfehlers ($\varepsilon(k)$) und des Proportionalitätskoeffizienten (L) bestimmt wurden, korrigiert werden.

8. Bestimmungsverfahren nach einem der Ansprüche 1 bis 7, wobei, nach dem Bestimmen der Schätzungen der Geschwindigkeit ($v_{est}$) des Fahrzeugs, des Gefälles der Strecke ($\alpha_{est}$) und der Masse des Fahrzeugs ($m_{v,est}$) geprüft wird, dass die Fahrt des Fahrzeugs beendet ist, und, wenn die Fahrt des Fahrzeugs beendet ist, ein Mittelwert der Masse ($Moy(m_v)$) des Fahrzeugs an dem Ende der Fahrt in Abhängigkeit von den Schätzungen der Masse des Fahrzeugs ($m_{v,est}$) berechnet wird, und der berechnete Mittelwert der Masse ($Moy(m_v)$) zu einem Server übertragen wird.

9. Vorrichtung zum Bestimmen der Gesamtmasse eines Kraftfahrzeugs ausgehend von Daten eines Kommunikationsnetzwerks und Parametern des Fahrzeugs, die umfasst:

    - ein Verarbeitungsmodul der Daten, das dazu geeignet ist, am Eingang Daten von Parametern des Fahrzeugs, die in einem Rechner des Kraftfahrzeugs gehostet sind, zu empfangen, die die äquivalente Masse der Fahrelemente ($m_r$), den Fahrwiderstandskoeffizienten der Reifen ($c_r$), die Volumenmasse der Luft des Fahrzeugs ($\rho_a$), die Frontoberfläche des Fahrzeugs ($A_f$), den Luftwiderstandsbeiwert ($c_x$) und den Radius der Räder ($r_w$) des Fahrzeugs umfassen, **dadurch gekennzeichnet, dass**:

    das Verarbeitungsmodul der Daten am Eingang Einstellungsparameter empfängt, die von einer Einstellungsdatenbank (22) stammen, wie die Ausführungszeit des Schätzungsverfahrens der Masse ($\Delta T$), die Kovarianzmatrix des Messrauschens (R), die Kovarianzmatrix (Q) der Modellierungsunbestimmtheiten auf der Geschwindigkeit und dem Gefälle, und die Kovarianzmatrix ($Q_M$) der Modellierungsunbestimmtheiten auf der Masse, und Daten, die von einem Kommunikationsnetzwerk stammen, wie die Geschwindigkeit des Fahrzeugs ($v$), das Untersetzungsverhältnis des Getriebes ($\gamma$), das Eindrückniveau des Bremspedals, das Nutzungsniveau des Verlangsamers sowie eine Schätzung des Moments, das von dem Verbrennungsmotor ($T_e$) und diesen mechanischen Reibungen geliefert wird; und dass sie ein Berechnungsmodul (30) einer Schätzung der zulässigen Gesamtmasse ($m_{v,est}$) des Fahrzeugs, der Geschwindigkeit des Fahrzeugs ($v_{est}$) und des Gefälles der Strecke ($\alpha_{est}$) in einem Augenblick (k) umfasst, indem die Grundgleichung der Dynamik angewandt wird, und in Abhängigkeit von den Werten der Gesamtmasse des Fahrzeugs, der Geschwindigkeit des Fahrzeugs und des Gefälles der Strecke in einem vorhergehenden Augenblick (k-1), wobei das Berechnungsmodul (30) ein erstes Modul (31) zum Schätzen der zulässigen Gesamtmasse ($m_{v,est}$) des Fahrzeugs, der Geschwindigkeit des Fahrzeugs ($v_{est}$) und des Gefälles der Strecke ($\alpha_{est}$) in Abhängigkeit von den Werten der Masse des Fahrzeugs, der Geschwindigkeit des Fahrzeugs und des Gefälles der Route in einem vorhergehenden Augenblick (k-1) umfasst, wobei das erste Modul (31) ein erstes Filter, "Kalman"-Filter ($F_1$) genannt, umfasst, das das Filtern der Geschwindigkeit des Fahrzeugs ($v_{est}$) und des Gefälles der Strecke ($\alpha_{est}$) erlaubt, und ein zweites Filter, "Kalman"-Filter ($F_2$) genannt, das das Schätzen der Masse des Fahrzeugs erlaubt, wobei die zwei Filter parallel angeordnet sind, und wobei das Berechnungsmodul (30) ein zweites Modul (32) zum Schätzen zweier Kovarianzmatrizen ($P$, $P_M$) jeweils mit Dimension 2x2 und 1x1 umfasst, die jeweils die Kovarianz des Fehlers auf den Variablen Geschwindigkeit und Gefälle, und die Kovarianz des Fehlers auf der Variablen Masse in Abhängigkeit von der Kovarianzmatrix ($Q$) der Modellierungsunbestimmtheiten auf der Geschwindigkeit und dem Gefälle und der Kovarianzmatrix ($Q_M$) der Modellierungsunbestimmtheiten auf der Masse auf der Basis der Grundgleichungen der Dynamik, der Werte der Gesamtmasse des Fahrzeugs, der Geschwindigkeit des Fahrzeugs und des Gefälles der Strecke in einem vorhergehenden Augenblick (k-1) und einer Riccati-Gleichung, deren gesuchte Variable die Kovarianzmatrix der Schätzungsfehler ist, ausdrücken.

10. Bestimmungsvorrichtung nach Anspruch 9, wobei das Berechnungsmodul (30) ein Korrekturmodul (33) der bestimmten Schätzungswerte umfasst, das ein Berechnungsmodul (34) eines Schätzungsfehlers ($\varepsilon(k)$) umfasst, das den Schätzungswert der Geschwindigkeit ($v_{est}$), der mit dem Wert der Geschwindigkeit ($v_{CAN}$) bestimmt wird, der von dem Netzwerk gemessen wird, vergleicht, und ein Berechnungsmodul (35) eines Proportionalitätskoeffizienten ($L$, $L_M$) in Abhängigkeit von den Kovarianzmatrizen ($P_{est}$, $P_{M,est}$) und den Gleichungen der Dynamik.

11. Bestimmungsvorrichtung nach einem der Ansprüche 9 oder 10, die ein Erfassungsmodul (40) eines Fahrtendes, ein Berechnungsmodul (50) eines Mittelwerts der Masse ($Moy(m_v)$) des Fahrzeugs an dem Ende der Fahrt und ein Kommunikationsmodul (60), das dazu geeignet ist, den Mittelwert der Masse ($Moy(m_v)$) des Fahrzeugs zu einem Server zu übertragen, umfasst.

## Claims

1. Method for determining the total mass of an automotive vehicle on the basis of data of a communication network, and of parameters of the vehicle, in which:

   - data are retrieved from a database of parameters of the vehicle, which parameters are hosted in a computer of the automotive vehicle,

   **characterized in that** it comprises the following steps:

   - setting parameters are retrieved from a settings database (22), included in the group comprising the execution time of the method for estimating the mass ($\Delta T$), the covariance matrix of the measurement noise (R), the covariance matrix ($Q$) of the modelling indeterminacies with regard to the speed and the slope and the covariance matrix ($Q_M$) of the modelling indeterminacies with regard to the mass,
   - data originating from the communication network are retrieved, included in the group comprising the speed of the vehicle ($v$), the downshift ratio of the transmission ($\gamma$), the level of depression of the brake pedal, the level of use of the retarder and an estimation of the torque provided by the heat engine ($T_e$) and of these mechanical frictions,
   - the motive force ($F_t(t)$) generated by the vehicle is determined as a function of the motor torque value ($T_e$), of the downshift coefficient of the transmission ($\gamma$), of the efficiency coefficient of the transmission ($\eta_{gb}$) and of the radius of the wheel ($r_w$),
   - the aerodynamic friction force ($F_a(t)$) is determined as a function of the data retrieved from the database of parameters,
   - the rolling resistance force ($F_r(t)$) is determined as a function of the mass of the vehicle ($m_v$), of the coefficient of rolling resistance of the tyres ($c_r$), and of the slope of the road ($\alpha$),
   - the force induced by gravity ($F_g(t)$) is determined as a function of the mass of the vehicle ($m_v$), of the gravity constant (g) and of the slope of the road ($\alpha$), and
   - an estimation of the total laden mass ($m_{v,est}$) of the vehicle, of the speed of the vehicle ($v_{est}$) and of the slope of the road ($\alpha_{est}$) is determined at an instant (k) by applying the fundamental equation of dynamics and as a function of the values of the total mass of the vehicle, of the speed of the vehicle and of the slope of the road at a previous instant (k-1)

   in which in order to determine an estimation of the total laden mass ($m_{v,est}$) of the vehicle, of the speed of the vehicle

($v_{est}$) and of the slope of the road ($\alpha_{est}$), first so-called "Kalman" filter allowing the filtering of the speed of the vehicle and of the slope of the road and a second so-called "Kalman" filter making it possible to estimate the mass of the vehicle are applied, the two filters being applied in parallel

and in which, at the same time as the step of determining an estimation of the total laden mass ($m_{v,est}$) of the vehicle, of the speed of the vehicle ($v_{est}$) and of the slope of the road ($\alpha_{est}$), an estimation is determined of two covariance matrices ($P$), of dimension 2x2, expressing the covariance of the error in the speed variable and slope variable and ($P_M$) of dimension 1x1, expressing the covariance of the error in the mass variable as a function of the covariance matrix ($Q$) of the modelling indeterminacies with regard to the speed and the slope and of the covariance matrix ($Q_M$) of the modelling indeterminacies with regard to the mass on the basis of the fundamental equations of dynamics, of the values of the total mass of the vehicle, of the speed of the vehicle and of the slope of the road at a previous instant and of a Riccati equation whose sought-after variable is the covariance matrix of the estimation errors.

2.  Method of determination according to Claim 1, in which, prior to the step of retrieving the data originating from the communication network, the mass of the vehicle ($m_v$), the speed of the vehicle ($v$), the slope of the road ($\alpha$), and the two covariance matrices ($P, P_M$) are reinitialized at the initial instant (t=0).

3.  Method of determination according to Claims 1 or 2, in which, prior to the step of determining an estimation of the total laden mass ($m_{v,est}$) of the vehicle, of the speed of the vehicle ($v_{est}$) and of the slope of the road ($\alpha_{est}$), it is verified, at the instant (k), that all the conditions are fulfilled for undertaking the computation of the estimation of the mass.

4.  Method of determination according to Claim 3, in which the conditions to be satisfied are: that the speed of the vehicle ($v$) is strictly positive and that the position of the brake pedal and the level of use of the retarder are zero.

5.  Method of determination according to any one of Claims 1 to 4, in which, a value of the estimation error ($\varepsilon(k)$) is computed by comparing the value of the estimation of the speed ($v_{est}$) determined with the value of the speed ($v_{CAN}$) measured by the communication network.

6.  Method of determination according to any one of Claims 1 to 5, in which, at least one proportionality coefficient ($L, L_M$) is computed as a function of the covariance matrices ($P_{est}, P_{M,est}$) and of the equations of dynamics.

7.  Method of determination according to Claims 5 and 6, in which the estimations of the speed ($v_{est}$) of the vehicle of the slope of the road ($\alpha_{est}$) and of the mass of the vehicle ($m_{v,est}$) which are determined are corrected as a function of the value of the estimation error ($\varepsilon(k)$) and of the proportionality coefficient ($L$).

8.  Method of determination according to any one of Claims 1 to 7, in which after having determined the estimations of the speed ($v_{est}$) of the vehicle of the slope of the road ($\alpha_{est}$) and of the mass of the vehicle ($m_{v,est}$), it is verified that the journey of the vehicle has terminated, and when the journey of the vehicle has terminated, an average value of the mass ($Avg(m_v)$) of the vehicle at the end of the journey is computed as a function of the estimations of the mass of the vehicle ($m_{v,est}$) and the said average value of the mass ($Avg(m_v)$) computed is transmitted to a server.

9.  Device for determining the total mass of an automotive vehicle on the basis of data of a communication network and parameters of the vehicle, comprising:

    - a module for processing the data which is able to receive, as input, data of parameters of the vehicle, which parameters are hosted in a computer of the automotive vehicle comprising the equivalent mass of the rolling elements ($m_r$), the coefficient of rolling resistance of the tyres ($c_r$), the density of the air of the vehicle ($\rho_a$), the frontal surface area of the vehicle ($A_f$), the drag coefficient ($c_x$) and the radius of the wheels ($r_w$) of the vehicle, **characterized in that**:

      the module for processing the data receives, as input, setting parameters such as the execution time of the method for estimating the mass ($\Delta T$), the covariance matrix of the measurement noise (R), the covariance matrix ($Q$) of the modelling indeterminacies with regard to the speed and the slope and the covariance matrix ($Q_M$) of the modelling indeterminacies with regard to the mass, and data originating from a communication network, such as the speed of the vehicle ($v$) the downshift ratio of the transmission ($\gamma$), the level of depression of the brake pedal, the level of use of the retarder and an estimation of the torque provided by the heat engine ($T_e$) and of these mechanical frictions; and
      **in that** it comprises a computation module (30) for computing an estimation of the total laden mass ($m_{v,est}$)

of the vehicle, of the speed of the vehicle ($v_{est}$) and of the slope of the road ($\alpha_{est}$) at an instant (k) by applying the fundamental equation of dynamics and as a function of the values of the total mass of the vehicle, of the speed of the vehicle and of the slope of the road at a previous instant (k-1), said computational module (30) comprising a first module 31 for estimating the speed $v_{est}$ of the vehicle, the slope of the road $\alpha_{est}$ and the mass of the vehicle $m_{v,est}$, said first estimation module 31 comprising a first, so-called "Kalman", filter $F_1$ allowing the filtering of the measurement of the speed and of the estimation of the slope of the road travelled and a second, so-called "Kalman", filter $F_2$ making it possible to estimate the mass of the vehicle, the two filters being disposed in parallel

and in which the computation module (30) comprises a second module (32) for estimating two covariance matrices ($P, P_M$) respectively of dimension 2x2 and 1x1 and expressing respectively the covariance of the error in the speed variable and slope variable and the covariance of the error in the mass variable as a function of the covariance matrix ($Q$) of the modelling indeterminacies with regard to the speed and the slope and of the covariance matrix ($Q_M$) of the modelling indeterminacies with regard to the mass on the basis of the fundamental equations of dynamics, of the values of the total mass of the vehicle, of the speed of the vehicle and of the slope of the road at a previous instant and of a Riccati equation whose sought-after variable is the covariance matrix of the estimation errors.

10. Determination device according to Claim 9, in which the computation module (30) comprises a correction module (33) for correcting the estimation values determined comprising a module (34) for computing an estimation error ($\varepsilon$(k)) comparing the value of the estimation of the speed ($v_{est}$) determined with the value of the speed ($v_{CAN}$) measured by the network and a module (35) for computing a proportionality coefficient ($L, L_M$) as a function of the covariance matrices ($P_{est}, P_{M,est}$) and of the equations of dynamics.

11. Determination device according to Claim 9 or 10, comprising an end-of-journey detection module (40), a module (50) for computing an average value of the mass ($Avg(m_v)$) of the vehicle at the end of the journey and a communication module (60) able to transmit the said average value of the mass ($Avg(m_v)$) of the vehicle to a server.

FIG.1

# FIG.2

100

```
┌─────────┐
│   110   │
└─────────┘
     │
     ▼
┌─────────┐
│   120   │
└─────────┘
     │
     ▼
┌─────────┐
│   130   │
└─────────┘
     │
     ▼
┌─────────┐
│   140   │
└─────────┘
     │
     ▼
┌─────────┐      ┌─────────┐
│   151   │      │   152   │
└─────────┘      └─────────┘
     │
     ▼
┌─────────┐
│   160   │
└─────────┘
     │
     ▼
┌─────────┐
│   170   │
└─────────┘
     │
     ▼
┌─────────┐
│   180   │
└─────────┘
     │
     ▼
┌─────────┐
│   190   │
└─────────┘
     │
     ▼
┌─────────┐
│   200   │
└─────────┘
```

## RÉFÉRENCES CITÉES DANS LA DESCRIPTION

**Documents brevets cités dans la description**

- EP 2505448 A1